# FASCICULE DE BREVET EUROPEEN

(11) **EP 2 764 758 B1**
(45) Date de publication et mention de la délivrance du brevet: **30.12.2015**
(21) Numéro de dépôt: 12770475.7
(22) Date de dépôt: 04.10.2012
(51) Int. Cl.: H05H 1/34, B23K 10/00

(54) **SYSTEME DE TRANSFERT D'ENERGIE ELECTRIQUE EN ENERGIE THERMIQUE**
SYSTEM ZUR UMWANDLUNG ELEKTRISCHER ENERGIE IN WÄRMEENERGIE
SYSTEM FOR CONVERTING ELECTRIC ENERGY INTO THERMAL ENERGY

(30) Priorité: 05.10.2011 FR 1158968
(43) Date de publication de la demande: 13.08.2014
(73) Titulaire: Centre National de la Recherche Scientifique, 75016 Paris (FR); Europlasma, 40110 Bruges (FR)
(72) Inventeur: FREYSZ, Eric, F-33600 Pessac (FR); ROBERT-ARNOUIL, Jean-Paul, F-40110 Bruges (FR)
(74) Mandataire: Henriot, Marie-Pierre
(86) Numéro de dépôt international: PCT/EP2012/069647
(87) Numéro de publication internationale: WO 2013/050492

(56) Documents cités:
- WO-A2-00/64618
- US-A- 3 404 403
- US-A- 4 179 599
- US-A- 5 705 785

## Description

Le domaine de l'invention est celui du transfert d'énergie électrique en énergie thermique tel qu'utilisé dans les torches à plasma ou les postes à souder, et qui est initié au moyen d'un arc électrique. L'invention porte plus particulièrement sur le dispositif d'amorçage de l'arc électrique.

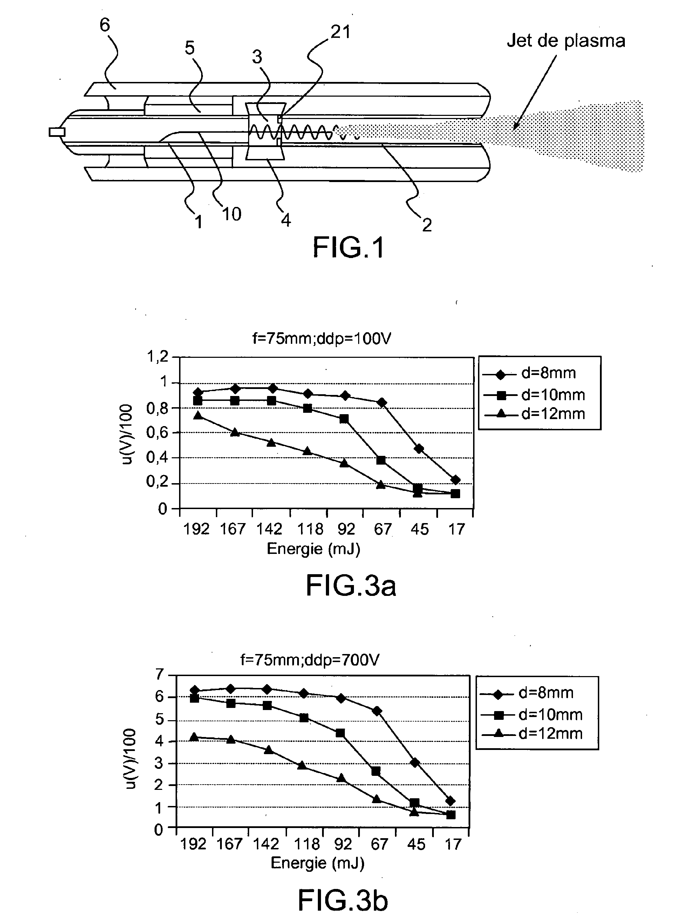

Les torches plasma de type à arc non transféré dont un exemple est montré figure 1, comportent deux électrodes 1, 2 tubulaires coaxiales séparées par une chambre d'injection 4 d'un gaz plasmagène 3, conçue de façon à ce que ce gaz soit injecté en vortex dans la torche. Les électrodes sont nommées amont et aval par rapport au sens de l'écoulement gazeux. L'électrode aval 2 est complétée par un point starter 21.

Le fonctionnement de la torche est brièvement rappelé ci-dessous :
- L'application d'un courant électrique continu aux bornes des électrodes permet d'initier un arc électrique 10 entre les électrodes 1, 2. Actuellement, l'amorçage de cet arc électrique à l'intérieur des torches à plasma de forte puissance c'est-à-dire supérieure à 80kW, est réalisé par la mise en court circuit « de contact » des deux électrodes : l'électrode amont 1, mobile en translation le long de son axe, avance à l'intérieur de la torche à plasma jusqu'à toucher l'électrode aval 2. Les deux électrodes sont ensuite brutalement écartées jusqu'à être séparées d'une distance de fonctionnement d, en même temps qu'un courant est appliqué aux bornes des deux électrodes créant ainsi l'arc électrique 10.
- Au contact de l'arc, le gaz 3 s'échauffe rapidement et se transforme en un plasma de très haute température.
- L'injection de gaz plasmagène 3 dans la torche couplée à l'utilisation d'une bobine de champ 5 permet ensuite d'étirer cet arc afin qu'il prenne position à l'intérieur des électrodes de la torche.
- Le gaz ionisé est expulsé au fur et à mesure par l'extrémité aval de la torche. Il en résulte un jet de plasma ou « dard » à très haute température typiquement 4000 K.
- La bobine de champ magnétique 5, enroulée autour de l'électrode amont, permet de piloter le mouvement du pied d'arc 10 afin de contrôler la plage d'usure et d'augmenter la longévité de l'électrode 1.
- Un système de refroidissement 6 assurant une circulation d'un film d'eau en contact avec la surface extérieure des électrodes permet le refroidissement des pièces exposées à l'arc ou au plasma.
- Le point de fonctionnement de la torche est choisi en fixant simultanément un courant électrique spécifique et par le contrôle du débit de gaz plasmagène introduit dans la torche.

Bien que cette méthode d'allumage soit très performante, elle présente néanmoins des inconvénients.
- En particulier, l'électrode amont doit être montée sur un vérin hydraulique permettant sa translation. Ce vérin ainsi que la centrale hydraulique associée représentent un investissement important et nécessitent des opérations de maintenance régulière.
- Le réglage des deux temporisations entre le recul de l'électrode et l'application du courant électrique est très délicat.
- De plus les alimentations électriques doivent être capables de supporter des tensions à vide élevées ainsi que de fortes variations de courant, typiquement de l'ordre de 100A dépendant du courant de démarrage entre le pic de tension nécessaire lors du court-circuit « de contact » et la tension de fonctionnement. Elles doivent permettre de soutenir le courant dans le circuit électrique composé des deux électrodes lors de la transition entre le court-circuit de contact et le circuit ouvert qui lui, comporte les deux électrodes et du gaz plasmagène ionisé.

D'autres techniques sont également connues pour amorcer une décharge électrique dans une torche à plasma de faible puissance, telles que l'utilisation d'une bougie conventionnelle ou une décharge RF. Mais compte tenu du faible écartement entre les électrodes nécessaire à ces techniques, elles ne sont pas adaptées à des systèmes de transfert d'énergie tels que les torches plasma de forte puissance.

WO 0064618 divulgue un système d'amorçage de la décharge électrique entre deux électrodes par moyen d'un faisceau laser focalisé sur l'entière colonne joignant les deux électrodes.

Le but de l'invention est de pallier ces inconvénients.

Le principe de l'invention est de créer un plasma laser d'amorçage entre les électrodes du système, ces électrodes étant séparées d'une distance fixe qui est leur distance de fonctionnement. Le plasma laser d'amorçage est produit en utilisant une impulsion laser intense qui est focalisée en différents points entre les deux électrodes.

Plus précisément l'invention a pour objet un système de transfert d'énergie électrique en énergie thermique selon la revendication 1. Cela permet :
- d'utiliser des électrodes séparées d'une distance fixe, et donc
- de supprimer le dispositif de translation de ces électrodes, tel que le vérin cité en préambule,
- de simplifier l'alimentation électrique du système de transfert d'énergie qui n'est plus sollicitée par le court-circuit de contact et ses contraintes en termes de tensions à vide élevées et de fortes variations de courant,
- de supprimer les contraintes de temporisation entre le recul de l'électrode et l'application du courant électrique.

Selon une caractéristique de l'invention, le dispositif de focalisation comporte un multiplicateur de fréquence apte à produire au moins une harmonique de l'impulsion laser, placé en sortie du dispositif d'émission de l'impulsion, et une optique convergente chromatique placée en aval du multiplicateur, des points de focalisation étant alors déterminés en fonction de ces harmoniques.

Selon une alternative, le dispositif de focalisation comporte une optique convergente achromatique apte à focaliser l'impulsion en plusieurs points de focalisation.

Une électrode peut être percée ou les deux, de manière à laisser passer l'impulsion laser.

De préférence, une partie d'une électrode est sur le trajet de l'impulsion laser de manière à interagir avec cette impulsion.

Une électrode est éventuellement remplacée ou complétée par un point starter.

Ce système de transfert peut être un poste à souder.

L'invention a aussi pour objet une torche à plasma comportant un système de transfert tel que décrit et un dispositif d'injection d'un gaz plasmagène entre les deux électrodes.

D'autres caractéristiques et avantages de l'invention apparaîtront à la lecture de la description détaillée qui suit, faite à titre d'exemple non limitatif et en référence aux dessins annexés dans lesquels :
la figure 1 représente schématiquement un exemple de torche à plasma selon l'état de la technique,
les figures 2 représentent schématiquement différents exemples de réalisation d'un système de transfert d'énergie électrique en énergie thermique selon l'invention,
les figures 3 montrent l'évolution de la tension crête U de l'arc électrique créé entre les deux électrodes pour différentes valeurs de l'écartement d, de la tension ddp appliquée aux bornes des électrodes (100 V pour la figure 3a, 700 V pour la figure 3b) et de l'énergie de l'impulsion laser.

D'une figure à l'autre, les mêmes éléments sont repérés par les mêmes références.

Comme enseigné en électrostatique, si l'on applique un champ électrique supérieur à 3 kV.mm⁻¹ dans de l'air sec, celui-ci ne se comporte plus comme un milieu diélectrique et l'on crée un arc électrique. Le mécanisme microscopique responsable de ce phénomène est l'accélération par le champ électrique du faible nombre d'électrons libres dans l'air. Ceux-ci sont accélérés, entrent en collision et ionisent les gaz neutres composant l'air (essentiellement N2 et 02). L'ionisation des gaz neutres se traduit par l'arrachement d'un ou plusieurs électrons. On obtient ainsi un effet d'avalanche électronique qui se traduit par un accroissement très rapide du nombre d'électrons le long de l'axe entre les deux électrodes. L'air qui était initialement un milieu isolant devient très rapidement conducteur. Un courant important, responsable de l'arc électrique, circule alors entre les deux électrodes.

Il a été montré qu'en focalisant une impulsion laser énergétique, entre deux électrodes distantes de plusieurs centimètres et soumises à une ddp, on crée un arc électrique.

Le principe d'allumage de l'arc électrique est de créer un plasma laser d'amorçage entre les électrodes amont et aval. Il est produit en utilisant une impulsion laser intense focalisée qui ionise les différents gaz contenus dans l'air. Des électrons sont produits par ionisation multi photonique. Dès que leur densité est suffisamment importante, ces électrons, associés aux électrons initialement libres, absorbent fortement l'énergie de l'impulsion laser (phénomène parfois connu sous le terme de « Bremsstrahlung » inverse). En présence du champ électromagnétique associé à l'impulsion laser, ils sont ainsi chauffés et entrent en collision avec les différentes molécules de l'air ou du gaz. Ils les ionisent en leur arrachant un ou plusieurs électrons. On a ainsi un phénomène d'avalanche électronique qui se traduit par une très forte augmentation de la densité électronique et ionique qui réduit considérablement la résistivité de l'air. Dans la zone éclairée, un plasma extrêmement chaud est ainsi créé. Ce plasma chaud se détend rapidement dans l'air ou le gaz et rayonne dans le visible puis disparait en quelques microsecondes. Durant la durée de vie de ce plasma relativement brève, comprise entre 1 ns et 5µs, la zone éclairée par l'impulsion laser est donc fortement conductrice et elle peut facilement permettre l'amorçage d'un arc électrique entre deux électrodes soumises à une forte ddp.

Cependant comme nous l'avons déjà fait remarquer, le plasma induit par une impulsion laser est très bien localisé dans le temps, mais aussi dans l'espace. Ainsi, seule la zone le long de l'axe du faisceau laser dans laquelle un plasma laser a été créé offre peu de résistance au passage d'un courant. Pour produire un plasma laser, l'énergie par impulsion doit être supérieure à 1 GW/cm². Pour une impulsion d'1 nanoseconde ayant une énergie de 10 milli joules l'extension du plasma le long de l'axe de propagation du faisceau est typiquement d'environ 1mm.

La dimension du plasma laser selon l'axe du faisceau laser est donc a priori limitée à quelques millimètres, et un peu moins dans la direction perpendiculaire. Elle restreint donc à quelques millimètres la distance entre les électrodes des torches plasmas, distance pour lesquelles les technologies citées en préambule s'avèrent tout aussi simples à mettre en oeuvre. Cette zone est typiquement inférieure à 1 mm alors que les électrodes sont écartées d'une distance fixe typiquement comprise entre 8 mm et 15 mm dans leur position de fonctionnement.

L'invention est basée sur un élargissement de la zone dans laquelle le plasma laser est induit. Ceci est obtenu en focalisant l'impulsion laser en différents points situés sensiblement le long de l'axe entre les deux électrodes (plus précisément, dans la zone d'influence des lignes de champs créées par les deux électrodes, l'influence étant la plus forte selon l'axe joignant les électrodes). Au voisinage des différents points de focalisation, les zones dans lesquelles un plasma laser a été créé sont fortement conductrices. En multipliant ainsi le nombre de plasmas laser et en les alignant selon l'axe joignant les deux électrodes, on augmente la zone conductrice.

Lorsqu'en chacun des points de focalisation, la puissance crête de l'impulsion est supérieure au seuil de puissance crête indiqué, un plasma laser est produit. Dans la pratique un point de focalisation est en fait une tache dont la dimension non nulle est proportionnelle à la focale et à la taille du faisceau laser sur la lentille; on choisit donc avantageusement une focalisation de courte focale et un faisceau laser couvrant la pupille d'entrée de la lentille de manière à diminuer la taille de la tache laser et ainsi concentrer l'énergie de l'impulsion sur cette tache. De préférence, le plasma est entretenu par une succession d'impulsions, la cadence d'émission des impulsions dépendant de leur durée. Une cadence de 10 Hz suffit pour des impulsions d'environ 5ns ; une cadence supérieure peut intervenir mais n'est pas nécessaire.

Pour amorcer facilement l'arc électrique, les différents plasmas laser doivent être suffisamment proches pour engendrer entre les deux électrodes une zone électriquement conductrice continue, même si pas nécessairement homogène en étant fortement conductrice par endroits et faiblement conductrice à d'autres endroits. Ils ne doivent donc pas être séparés de plus d'une distance d₁<d qui dépend d'une part de la ddp appliquée aux bornes des électrodes et d'autre part du gaz entre ces électrodes. Par exemple, pour de l'air sec et une ddp d'environ 10 kilovolts, la distance d₁ séparant les différents plasmas laser ne doit pas être supérieure à 10 millimètres. Cette dernière distance peut aussi être modulée en changeant la taille de la tache laser en faisant varier la focale de la lentille comme indiqué précédemment.

Bien sûr plus la distance d₁ entre les différents plasmas peut être importante, plus la distance d inter-électrodes peut être augmentée. On peut encore accroître cette distance inter-électrode en ablatant une partie de l'une des électrodes avec l'impulsion laser par effet LIBS acronyme de l'expression anglo-saxonne «Laser Induced Breakdown Spectroscopy ». Dans ce dernier cas, l'impulsion laser vaporise et/ou ionise une partie de l'électrode amont ou aval. La zone ainsi créée offre elle aussi peu de résistance au passage d'un courant électrique.

L'invention permet ainsi :
- d'utiliser des électrodes séparées d'une distance fixe d,
- de supprimer le dispositif de translation de ces électrodes,
- de simplifier l'alimentation électrique du système de transfert d'énergie qui n'est plus sollicitée pour un court-circuit de contact et ses contraintes en termes de tensions à vide élevées et de fortes variations de courant,
- de supprimer les contraintes de temporisation entre le recul de l'électrode et l'application du courant électrique ; en effet, lors de la mise en marche du système, la tension de fonctionnement est appliquée aux électrodes, puis on éclaire avec le laser, ce qui permet d'amorcer l'arc électrique entre les électrodes, celui-ci étant maintenu par la même tension de fonctionnement.

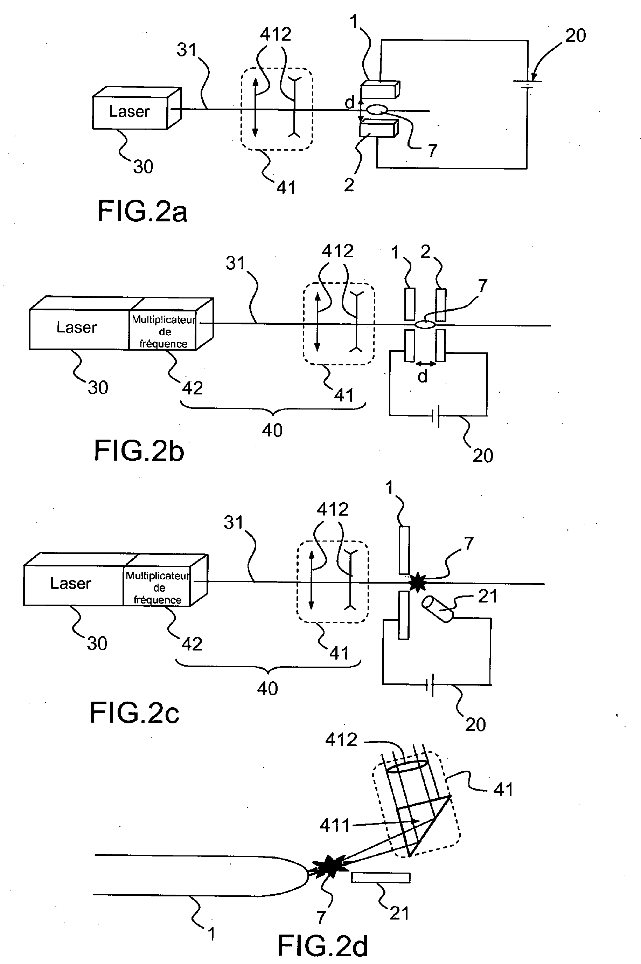

On décrit en relation avec les figures 2 des exemples de réalisation d'un système de transfert d'énergie électrique en énergie thermique selon l'invention. Il comprend :
- deux électrodes 1, 2, en cuivre par exemple, séparées d'une distance d fixe, leur distance de fonctionnement,
- un dispositif 20 d'alimentation électrique de ces électrodes apte à appliquer entre ces électrodes une ddp (de quelques kV généralement), qui peut être par exemple un condensateur dont les bornes sont ces électrodes ou une bobine ou un redresseur,
- un dispositif 30 d'émission d'une impulsion laser de puissance crête supérieure à 1 GW/cm², vers la zone d'influence située entre les deux électrodes ; il s'agit par exemple d'un laser Nd :YAG délivrant des impulsions ayant une énergie de 330 mJ, centrées en longueur d'onde à 1.064 µm et ayant une durée de 10 ns ou encore des impulsions de 33 mJ ayant une durée de 1 ns,
- un dispositif 40 de focalisation de l'impulsion entre les deux électrodes selon N points de focalisation. Ces points de focalisation doivent être situés dans la zone d'influence des lignes de champs créées par les deux électrodes. Cette focalisation de l'impulsion laser simultanément en plusieurs points peut être obtenue de différentes manières. En focalisant une impulsion d'un laser impulsionnel Nd:YAG doublée et triplée (voire plus) en fréquence avec une optique 41 chromatique de courte focale, comportant généralement un groupe de lentilles 412 comme on peut le voir sur les figures. Dans ce cas, le dispositif de focalisation comporte en outre un multiplicateur de fréquence 42 placé en sortie du dispositif 30 d'émission de l'impulsion laser et en amont de l'optique 41 chromatique, et apte à produire des harmoniques de l'impulsion laser. Dans le cas du laser cité en exemple et triplé en fréquence, on obtient en utilisant une optique de focalisation chromatique, une impulsion de longueurs d'onde centrées à 1064 nm, 532 nm et 335 nm qui est focalisée en trois points le long de l'axe 31 de propagation de l'impulsion. Selon une alternative, l'optique de focalisation est éventuellement achromatique mais a une configuration telle que par exemple le centre du faisceau est focalisé en un point, et sa périphérie en un autre point, ces deux points de focalisation étant le long de l'axe 31 de propagation de l'impulsion. Une optique combinant les deux possibilités peut également être envisagée.

Selon un premier mode de réalisation de l'invention, les deux électrodes 1, 2 sont des plaques placées parallèlement à l'axe 31 de propagation du faisceau laser, de part et d'autre de celui-ci comme montré figure 2a.

Ayant remarqué que le plasma 7 s'étend préférentiellement selon l'axe 31 de propagation du faisceau laser comme illustré sur les figures 2a et 2b, un deuxième mode de réalisation a été conçu montré figure 2b : les deux électrodes 1, 2 sont des plaques placées perpendiculairement à l'axe 31 de propagation du faisceau laser, les électrodes étant percées d'un trou d'environ 1 mm de diamètre pour laisser passer l'impulsion laser. De préférence seule l'électrode 1 située du côté du dispositif d'émission laser, est percée car l'impact de l'impulsion laser sur l'autre électrode 2 ablate une partie du métal de celle-ci et ainsi facilite la création du plasma laser 7, ce qui permet d'accroître la distance inter-électrode d. Par effet LIBS acronyme de l'expression anglo-saxonne Laser Induced Breakdown Spectroscopy, l'impulsion ionise différentes espèces du cuivre au niveau de cette électrode. Ce plasma LIBS qui s'ajoute au plasma laser conventionnel facilite la diminution du seuil de puissance du laser d'amorçage.

Selon un troisième mode de réalisation que l'on peut voir figure 2c, une électrode 2 est remplacée ou complétée par un pion starter 21 tel qu'utilisé dans l'exemple de la figure 1, de préférence placé de manière à bloquer l'impulsion laser.

On montre figures 3a et 3b l'évolution de la tension crête U de l'arc électrique créé entre les deux électrodes 1, 2 pour différentes valeurs de l'écartement d (8, 10 ou 12 mm), de la tension ddp appliquée aux bornes des électrodes (100 V pour la figure 3a, 700 V pour la figure 3b) et de l'énergie de l'impulsion laser. Ces valeurs ont été obtenues avec un système tel que montré figure 2c, équipé d'un dispositif de focalisation muni d'un doubleur de fréquence produisant à partir d'un laser Nd : YAG une impulsion centrée sur 1064 nm et 532 nm, et d'une optique chromatique ayant une focale d'environ 7 cm, focalisant l'impulsion laser en deux points.

Selon un quatrième mode de réalisation décrit en relation avec la figure 2d, le dispositif 30 d'émission de l'impulsion ne peut être placé sur l'axe joignant les deux électrodes, en raison par exemple d'un encombrement mécanique trop important au voisinage des électrodes. L'optique du dispositif de focalisation placé en dehors de l'axe joignant les électrodes, comporte alors en plus d'un groupe de lentilles 412, des éléments de renvoi du faisceau entre les électrodes tels qu'un miroir ou un prisme 411. Le prisme est par exemple en saphir, matériau ayant d'excellentes qualités optiques et capable de supporter sans dommage des impulsions de forte énergie et de hautes températures.

Ce système de transfert est par exemple appliqué à un poste à souder électrique. Actuellement, un arc électrique est créé entre les deux électrodes du poste à souder par un court-circuit de contact et l'opérateur ajuste manuellement la distance inter-électrodes pour étirer l'arc. Un poste à souder selon l'invention équipé de son dispositif d'amorçage par laser permet d'éviter cet ajustement manuel de la distance inter-électrode.

Il peut aussi être appliqué à une torche à plasma. Il est dans ce cas complété par un dispositif d'injection d'un gaz plasmagène entre les deux électrodes. Compte tenu de la configuration de la torche à plasma et de l'encombrement mécanique au voisinage des électrodes, le dispositif d'émission de l'impulsion ne peut être placé sur l'axe joignant les deux électrodes. Le quatrième mode de réalisation est alors privilégié. Le plasma d'amorçage permet d'initier un arc électrique entre les deux électrodes soumis à une différence de potentiel (ddp) de l'ordre de quelques kV. Ce dispositif d'amorçage par laser vient remplacer le système de vérin actuellement utilisé. Comme dans le cas des torches à plasma conventionnelles, cet arc électrique est ensuite transféré dans les électrodes amont et aval en injectant le gaz plasmagène.

## Revendications

1. Système de transfert d'énergie électrique en énergie thermique qui comprend deux électrodes (1, 2) séparées d'une distance d selon l'axe les joignant et aptes à créer des lignes de champs définissant une zone d'influence lorsque soumises à une différence de potentiel (ddp), un dispositif (20) d'alimentation électrique de ces électrodes, apte à fournir la différence de potentiel (ddp), un dispositif d'amorçage d'un arc électrique entre ces deux électrodes, comprenant un dispositif (30) d'émission d'une impulsion laser, **caractérisé en ce que** le dispositif d'amorçage comprend ultérieurement un dispositif (40) de focalisation de l'impulsion agencé pour produire N points de focalisation situés dans la zone d'influence la plus forte des lignes de champs créées par les deux électrodes, avec une densité de puissance crête de l'impulsion par point de focalisation supérieure à 1GW/cm², N étant déterminé en fonction de la puissance crête de l'impulsion et de la distance d qui est fixe, de manière à former une zone électriquement conductrice entre les deux électrodes.

2. Système de transfert d'énergie selon la revendication précédente, **caractérisé en ce que** le dispositif (40) de focalisation comporte un multiplicateur (42) de fréquence apte à produire au moins une harmonique de l'impulsion laser, placé en sortie du dispositif d'émission de l'impulsion, et une optique convergente (41) chromatique placée en aval du multiplicateur, des points de focalisation étant alors déterminés en fonction de ces harmoniques.

3. Système de transfert d'énergie selon la revendication 1, **caractérisé en ce que** le dispositif de focalisation comporte une optique convergente (41) achromatique apte à focaliser l'impulsion en plusieurs points de focalisation.

4. Système de transfert d'énergie selon l'une des revendications précédentes, **caractérisé en ce qu'**une électrode (1, 2) est percée ou les deux, de manière à laisser passer l'impulsion laser.

5. Système de transfert d'énergie selon l'une des revendications précédentes, **caractérisé en ce qu'**une partie d'une électrode (2) est sur le trajet de l'impulsion laser de manière à interagir avec cette impulsion.

6. Système de transfert d'énergie selon l'une des revendications précédentes, **caractérisé en ce qu'**une électrode (2) est remplacée ou complétée par un point starter (21).

7. Torche à plasma comportant un système de transfert selon l'une des revendications précédentes et un dispositif d'injection d'un gaz plasmagène entre les deux électrodes.

8. Poste à souder comportant un système de transfert selon l'une des revendications 1 à 6.

## Patentansprüche

1. System zur Umwandlung elektrischer Energie in Wärmeenergie, umfassend zwei Elektroden (1, 2), die in einem Abstand d gemäß der sie verbindenden Achse getrennt und imstande sind, Feldlinien zu erzeugen, die einen Einflussbereich definieren, wenn einer Potentialdifferenz (ddp) ausgesetzt, eine Stromversorgungsvorrichtung (20) dieser Elektroden, die imstande ist, die Potentialdifferenz (ddp) bereitzustellen, eine Zündvorrichtung eines elektrischen Bogens zwischen diesen zwei Elektroden, die eine Sendevorrichtung (30) eines Laserimpulses umfasst, **dadurch gekennzeichnet, dass** die Zündvorrichtung ferner eine Fokussierungsvorrichtung (40) des Impulses umfasst, die ausgebildet ist, um N Fokussierungspunkte zu produzieren, die sich im Einflussbereich der stärksten der von den zwei Elektroden erzeugten Feldlinien befinden, mit einer Spitzenleistungsdichte des Impulses je Fokussierungspunkt über 1 GW/cm², wobei N in Abhängigkeit von der Spitzenleistung des Impulses und dem festen Abstand d bestimmt ist, um eine elektrisch leitende Zonen zwischen den zwei Elektroden zu bilden.

2. System zur Energieumwandlung nach vorangehendem Anspruch, **dadurch gekennzeichnet, dass** die Fokussierungsvorrichtung (40) einen am Ausgang der Sendevorrichtung des Impulses platzierten Frequenzmultiplikator (42), der imstande ist, mindestens eine Harmonische des Laserimpulses zu produzieren, und eine nach dem Multiplikator platzierte chromatische konvergente Optik (41) aufweist, wobei Fokussierungspunkte dann in Abhängigkeit von diesen Harmonischen bestimmt sind.

3. System zur Energieumwandlung nach Anspruch 1, **dadurch gekennzeichnet, dass** die Fokussierungsvorrichtung eine achromatische konvergente Optik (41) aufweist, die imstande ist, den Impuls in mehreren Fokussierungspunkten zu fokussieren.

4. System zur Energieumwandlung nach einem der vorangehenden Ansprüche, **dadurch gekennzeichnet, dass** eine Elektrode (1, 2) durchbohrt ist oder beide, um den Laserimpuls hindurchzulassen.

5. System zur Energieumwandlung nach einem der vorangehenden Ansprüche, **dadurch gekennzeichnet, dass** ein Teil einer Elektrode (2) auf der Bahn des Laserimpulses ist, um mit diesem Impuls zu interagieren.

6. System zur Energieumwandlung nach einem der vorangehenden Ansprüche, **dadurch gekennzeichnet, dass** eine Elektrode (2) von einem Starterpunkt (21) ersetzt oder ergänzt wird.

7. Plasmabrenner, der ein Umwandlungssystem nach einem der vorangehenden Ansprüche und eine Einführvorrichtung eines plasmabildenden Gases zwischen den zwei Elektroden umfasst.

8. Schweißstation, die ein Umwandlungssystem nach einem der Ansprüche 1 bis 6 aufweist.

## Claims

1. System for converting electrical energy into thermal energy which comprises two electrodes (1, 2) which are separated by a distance d along the axis which joins them and which are capable of creating field lines which define an influence zone when subjected to a potential difference (ddp), a device (20) which is for supplying electrical energy to these electrodes and which is capable of supplying the potential difference (ddp), a device which is for initiating an electric arc between these two electrodes, comprising a device (30) for emitting a laser pulse, **characterised in that** the initiation device further comprises a device (40) for focusing the pulse which is arranged to produce N focal points which are located in the strongest influence zone of the field lines created by the two electrodes, with a peak power density of the pulse per focal point greater than 1GW/cm², N being determined in accordance with the peak power of the pulse and the distance d which is fixed, so as to form an electrically conductive zone between the two electrodes.

2. System for converting energy according to the preceding claim, **characterised in that** the focusing device (40) comprises a frequency multiplier (42) which is capable of producing at least one laser pulse harmonic and which is placed at the output of the pulse emission device, and a chromatic convergent optics (41) which is placed downstream of the multiplier, focal points being determined in accordance with these harmonics.

3. System for converting energy according to claim 1, **characterised in that** the focusing device comprises an achromatic convergent optics (41) which is capable of focusing the pulse at several focal points.

4. System for converting energy according to any one of the preceding claims, **characterised in that** one electrode (1, 2) is perforated or both, in order to allow the laser pulse to pass through.

5. System for converting energy according to any one of the preceding claims, **characterised in that** a portion of an electrode (2) is on the laser pulse path so as to interact with this pulse.

6. System for converting energy according to any one of the preceding claims, **characterised in that** an electrode (2) is replaced or supplemented by a point starter (21).

7. Plasma torch comprising a converting system according to any one of the preceding claims and a device for injecting a plasma-generating gas between the two electrodes.

8. Welding station comprising a converting system according to any one of claims 1 to 6.
